# EUROPÄISCHE PATENTSCHRIFT

(11) **EP 2 690 158 B1**
(45) Veröffentlichungstag und Bekanntmachung des Hinweises auf die Patenterteilung: **10.07.2019**
(21) Anmeldenummer: 12859557.6
(22) Anmeldetag: 16.11.2012
(51) Int. Cl.: C10G 47/00, C01B 3/02, C01B 3/32, C01B 3/34, F23K 5/10, F23K 5/20

(54) **MEHRSTUFIGES VERFAHREN ZUR HERSTELLUNG EINES WASSERSTOFFHALTIGEN GASFÖRMIGEN BRENNSTOFFS UND WÄRMEGASGENERATORANLAGE**
MULTISTAGE METHOD FOR PRODUCING A HYDROGEN-CONTAINING GASEOUS FUEL AND THERMAL GAS GENERATOR PLANT
PROCÉDÉ À STADES MULTIPLES DE PRODUCTION DE COMBUSTIBLE GAZEUX HYDROGÉNÉ ET INSTALLATION DE GÉNÉRATION DE CHALEUR ET DE GAZ

(30) Priorität: 20.12.2011 RU 2011152015
(43) Veröffentlichungstag der Anmeldung: 29.01.2014
(73) Patentinhaber: "Nauchno-Proektnoe Proizvodstvenno-Stroitelnoe Obedinenie Grantstroi", Stavropol 355005 (RU)
(72) Erfinder: ARAKELIAN, Gamlet Gurgenovich, Stavropol 355005 (RU); ARAKELIAN, Artur Gamletovich, Stavropol 355005 (RU); ARAKELIAN, Granat Gamletovich, Stavropol 355005 (RU)
(74) Vertreter: Jeck, Anton
(86) Internationale Anmeldenummer: PCT/RU2012/000943
(87) Internationale Veröffentlichungsnummer: WO 2013/095190

(56) Entgegenhaltungen:
- EP-A2- 2 246 618
- DE-A1- 2 509 861
- FR-A1- 2 796 078
- RU-C1- 2 055 269
- RU-C2- 2 269 486
- US-A- 5 002 481

## Beschreibung

Die Erfindung betrifft ein Mehrstufenverfahren zur Herstellung von wasserstoffhaltigem Treibgas nach Anspruch 1 und eine Wärmegaserzeugungsanlage nach Anspruch 6. Die Erfindung ist in energiesparenden Technologien und hauptsächlich für Verfahren und Anlagen zur Umwandlung von Wasser H₂O in wasserstoffhaltiges Gas in Kombination mit einem Katalysatormedium aus der Reihe CₙH₂ₙ₊2 (Dieselkraftstoff, Heizöl) im kontinuierlichen Wärmefeuermedium bei einer Brenntemperatur von über 500° C einsetzbar. Meistens betreffen solche Verfahren Systeme, in denen die Herstellung von Treibgas und seine Verbrennung in einem einzigen Zyklus vereinigt sind. Das Verfahren kann auch dafür benutzt werden, um den wasserstoffhaltigen Treibstoff zu speichern.

Durch das Patent SU 1144977, 1985, ist ein Verfahren zur wasserstoffhaltigen Gaserzeugung bekannt, bei dem Komponenten während der wasserstoffhaltigen Gaserzeugung im Hochtemperaturbetrieb verbrannt werden. Der Mangel dieses Verfahrens ist ein hohes Energieaufnahmevermögen.

Durch das Patent SU 939380, 1982, ist ein Verfahren zur Gasherstellung aus fossilen Rohstoffen bekannt. Nach diesem Verfahren wird der bis 430 Grad überhitzte Wasserdampf mit Kohlenwasserstoffen vermengt. Nachfolgend wird das Dampfgasgemisch erwärmt. Der Mangel dieses Verfahrens ist der Einsatz eines zusätzlichen Energieträgers, um den überhitzten Dampf zu bekommen und ihn anschließend zu erwärmen.

Aus dem Stand der Technik ist die Anwendung von Wasserdampf in seinen verschiedenen Phasenzuständen bekannt. Jeder dieser Zustände ist durch verschiedene Gleichgewichtszustände gekennzeichnet. (Sowjetisches Lexikon. M.: 1985, - S. 962, Zusammenfassung "Dampf").

Der nächstkommende Stand der Technik ist ein Verfahren zur Herstellung von wasserstoffhaltigem Gas in einem Turbogeneratorsatz (RU 2269486, 2006). Das bekannte Verfahren und die Einrichtung hierfür haben den gleichen Bestimmungszweck wie die angemeldete technische Lösung. Dabei ist das Verfahren durch einen stufenweisen Ablauf der ausgeführten Arbeitsgänge gekennzeichnet, welche in einem einzigen geschlossenen Kreislauf vereinigt sind. Die Einrichtung hat dafür entsprechende Stufen.

Die bekannte technische Lösung betrifft ein geschlossenes Mehrstufenverfahren zur Herstellung von wasserstoffhaltigem Treibgas. Es umfasst den Prozessstart mit Zwangsaufheizung und Selbsterwärmung im Normal-Selbsterwärmungsbetrieb einschließlich der Vermengung einer Kohlenwasserstoffkomponente und Wasser, ihrer Einführung mittels Druckeinpressung, Erwärmung, Rückführung von Brennstoff und Zündung.

Die primäre Vermengung von Wasser und Kohlenwasserstoffkomponente in der Flüssigphase bei Normaltemperatur (20 Grad) der Komponenten gemäß der bekannten technischen Lösung stellt keine Stabilität der Zusammensetzung des dispersen Gemisches sicher. Das Gemisch wird nachher erwärmt, um Brennstoff herzustellen. Sobald die Vermengung aufhört (d. h. ab dem Zeitpunkt, wenn das Gemisch für die Erwärmung zugeführt wird), fängt ein umgekehrter Vorgang an: Das Gemisch zerlegt sich infolge verschiedener Wasser- und Kohlenwasserstoffkomponentendichten in Schichten. Dadurch wird das Gemisch dispersionsmäßig heterogen. Bei der nachfolgenden Erwärmung des Gemisches wird ebenfalls seine temperaturmäßige Unhomogenität beobachtet. Diese Unhomogenitäten werden im Endprodukt, und zwar im Brennstoffgemisch, aufrecht erhalten. Das Brennstoffgemisch wird zur Flammenentzündung geleitet. Es wird eine unstabile Flammenbrennung bewirkt, welche einerseits durch die Bildung von Lokalherden des (zusammensetzungsmäßig) unentzündlichen Gemisches bedingt ist. Dadurch wird die Zündung abgerissen, und die Flamme erlischt (das ist für schwere Kohlenwasserstoffkomponenten kennzeichnend). Andererseits werden (zusammensetzungsmäßig) kräftige Lokalherde in der Zusammensetzung gebildet. Das ruft unerwünschte Stichflammen hervor, was für leichte Kohlenwasserstoffkomponenten kennzeichnend ist.

Die bekannte Einrichtung umfasst entsprechende Bauteile zur Ausführung des Verfahrens, welche auch der angemeldeten technischen Lösung eigen sind. Die Wärmegaserzeugungsanlage ist in Form einer einzigen Einrichtung mit einem zusammengebauten mehrteiligen Gehäuse ausgebildet und umfasst ein System von Brennern, eine Flammkammer, ein Rührwerk zur Vermengung von Komponenten, eine Impulszündvorrichtung, Rohrleitungen und ein Startsystem mit einem Startbrenner und Brennstoffversorgung.

Der Einrichtung sind gleiche Mängel wie die des ausgeführten Verfahrens eigen, darunter Ausfälle während der Brennstoffherstellung, welche durch Gemischunhomogenität bedingt sind.

Es ist Aufgabe der Erfindung, die Mängel, welche dem bekannten Stand der Technik eigen sind, zu beseitigen sowie die Prozessstabilität bei der Herstellung von wasserstoffhaltigem Treibgas, die Verminderung des Energieaufnahmevermögens und des Verbrauchs von Kohlenwasserstoffkomponenten sicherzustellen.

Die gestellte Aufgabe wird durch die Merkmale des Anspruchs 1 gelöst.

Die Aufgabe wird durch einen mehrstufigen Prozess der Brennstoffherstellung gelöst. Jeder Stufe ist dabei ein entsprechender und hinsichtlich der Sicherheit, Stabilität und Homogenität am meisten geeigneter Phasenzustand der Komponenten und des Gemisches eigen. Dafür werden die Richtungen der Produktionsflüsse verändert und zwar: Die Einführung von Kohlenwasserstoffkomponenten und die von Wasser werden getrennt vorgenommen. Die Kohlenwasserstoffkomponente wird mit dem Wasser in seinem veränderten Phasenzustand vermengt.

Dadurch wird ein homogener Phasenzustand des Gemisches während der Brennstoffherstellung sichergestellt, um die Stabilität und die Beständigkeit der brennenden Prozessflamme und der brennenden Arbeitsflamme zu erreichen, sowie ein erhöhtes Sicherheitsniveau bei der Produktion des wasserstoffhaltigen Brennstoffs hergestellt, was unter anderem dank der Senkung des Kohlenwasserstoffkomponentenverbrauchs erreicht wird.

Vorteilhafte Weiterbildungen des Verfahrens und einer Einrichtung zur Durchführung des Verfahrens sind den Unteransprüchen zu entnehmen.

Im Gegenteil zum bekannten Verfahren erfolgt der Brennstoffherstellungsvorgang nach dem erfindungsgemäßen Verfahren in mehreren Stufen, wobei Kohlenwasserstoffkomponente und Wasser in den durch die Flamme erhitzten Prozesszylinder getrennt eingeführt werden. Der Prozesszylinder ist in getrennte Stufen je nach Anzahl der Prozessstufen der Brennstoffherstellung aufgeteilt. In der ersten Stufe wird Wasser eingeführt und bis zur Wasserdampfbildung erhitzt. In nachfolgenden Stufen wird Kohlenwasserstoffkomponente eingeführt und mit Wasserdampf vermengt. Danach wird das Dampf-Kohlenwasserstoffgemisch zusätzlich erwärmt und bis zur Temperatur der wasserstoffhaltigen Treibgasbildung erhitzt. Die Gasströmung wird in den Zündungsbereich rückgeführt, um das Brennen der Flamme sicherzustellen.

Im Normal-Selbsterwärmungsbetrieb werden die Vorgänge der wasserstoffhaltigen Treibgasbildung unter Erhitzung dreistufig ausgeführt. Diese Stufen entsprechen den Vorgängen von Dampfbildung, Erwärmung und Herstellung des wasserstoffhaltigen Treibgases. In der ersten Stufe wird das Wasser mittels Druckeinpressung mit einem Druck von 0,3 - 0,5 MPa eingeführt und bis zur Wasserdampfbildung mit einer Temperatur von 500 - 550° C erwärmt. Der nächste Vorgang ist die Vermengung und weitere Erwärmung in der zweiten Stufe. In dieser Stufe wird die Kohlenwasserstoffkomponente in den Mischer unter einem Druck von 0,3 - 0,5 MPa eingepresst. Die Kohlenwasserstoffkomponente wird mit Wasser vermengt, indem Wasserdampf unter einem Druck von 0,06 - 0,25 MPa injiziert (eingespritzt) wird. Das Wasser-Kohlenwasserstoffkomponentenverhältnis liegt dabei im Bereich von 10,5 : 1 bis 8 : 1. Das Gemisch wird bis zu einer Temperatur von 1000 - 1100° C erhitzt. Die dritte Stufe entspricht dem Vorgang der Herstellung des wasserstoffhaltigen Treibgases. In dieser Stufe wird das Gemisch bis zu einer Temperatur von 1300 - 2000° C erhitzt.

Im Normal-Selbsterwärmungsbetrieb kann die Zündung von der Flamme und/oder von einer Impulszündvorrichtung mit einem externen Funkenbildungsgenerator erfolgen. Der Funkenbildungsgenerator arbeitet mit einer Frequenz von 1 - 2 Hz. Die rückgeführte Brennstoffströmung kann zwecks Zündung und Flammenbildung teilweise zur Lagerung und/oder zum externen Verbrauch weitergeleitet werden. Der Flammenbildungs- und -aufrechterhaltungsvorgang kann zwecks Qualitäts- und Nutzeffektssteigerung beim Brennen unter Turboaufladung eingesetzt werden.

Beim Prozessanlauf im Zwangsaufheizungsbetrieb ist es zweckmäßig, die Voreinpressung von Wasser in einer Menge von 40 - 50 % des max. zulässigen Normalarbeitsumfangs unter einem Druck von 0,3 - 0,5 MPa vorzunehmen. Die Veränderung des Phasenzustandes von Wasser erfolgt mittels Erwärmung bis zur Wasserdampfbildung unter einer Temperatur von 450 - 500° C. Die Erwärmung soll durch eine unabhängige Wärmequelle, z. B. durch einen Induktionsheizer, erfolgen. Die Zündung des Dampf-Kohlenwasserstoffgemisches oder eines anderen Brennstoffbestandteils soll von einer unabhängigen Quelle mit Hilfe der Impulsfunkenzündeinrichtung mit einer unabhängigen Funkenbildungsquelle erfolgen, welche mit einer Frequenz von 40 - 50 Hz betrieben wird.

Die Wärmegaserzeugungsanlage ist im Gegensatz zur bekannten Einrichtung in Form einer einzigen Einrichtung mit einem zusammengebauten mehrteiligen Körper ausgebildet. Der Körper besteht aus zwei mit einem Spiel ineinander verschachtelten Zylinderrohren, welche einen Prozesszylinder zusammenbilden. Der Prozesszylinder ist in getrennte Stufen je nach Anzahl der Prozessstufen des Herstellungsprozesses des Brennstoffgemisches aufgeteilt. Die Flammkammer bildet einen Behälter des Innenrohrs. Die Vermengungseinrichtung ist in Form von einem Injektor ausgebildet. Dabei werden das Wasser in Form von Dampf und die Kohlenwasserstoffkomponente getrennt voneinander eingeführt. Der Austritt der letzten Stufe des Prozesszylinders ist über eine Rohrleitung mit dem Eintritt der Flammkammer verbunden, wo ein Brennersystem mit Zündvorrichtung eingebaut ist. Die Zündvorrichtung hat eine Impulsfunkenzündquelle, einen Arbeitsbrenner und einen Startbrenner. Am Austritt der Flammkammer ist ein Element zur Bildung der Arbeitsflamme angeordnet. Das Element ist in Form einer Verengungseinrichtung ausgebildet. Diese Verengungseinrichtung ist mit Brennstofftanks versehen. Die Brennstofftanks sind in Form von wasserdichten getrennten Verbrauchsbehältern für Wasser und Kohlenwasserstoffkomponente ausgebildet.

Die Einrichtung ist in Form eines Dreistufen-Prozesszylinders ausgebildet. Die erste Stufe sorgt für die Dampfbildung. Sie ist mit einer unabhängigen Induktionswärmequelle ausgerüstet. Die 2. Stufe realisiert Verfahrensschritte der Komponentenvermengung und Dampfgasgemischerwärmung. Die 3. Stufe stellt die Aufheizung zur Herstellung des Brennstoffgemisches sicher. Dabei ist der Verbrauchstank für Wasser in der Einrichtung über eine Rohrleitung mit dem Eintritt der 1. Stufe des Prozesszylinders verbunden. Ihr Austritt ist mittels einer Rohrleitung mit dem ersten Eintritt des Injektors verbunden. Der zweite Eintritt des Injektors ist mittels Rohrleitung mit dem Verbrauchstank für die Kohlenwasserstoffkomponente verbunden. Der Austritt des Injektors ist mittels Rohrleitung mit der 2. Stufe des Prozesszylinders verbunden. Diese ist mittels Rohrleitung mit der dritten Stufe des Prozesszylinders verbunden.

Das Radiusverhältnis der Rohre, welche den Prozesszylinder zur Herstellung des Brennstoffgemisches zusammen bilden, kann
0,3 > (R1/r2) > 0,1 betragen;
wobei R1 - der Außendurchmesser des Innenrohrs und
r2 - der Innendurchmesser des Außenrohrs ist.

Am Eintritt des Turbinenbrennersystems kann eine Turboaufladungseinrichtung eingebaut werden. Es ist zweckmäßig, einen konstanten Überdruck von 0,3 - 0,5 MPa in Verbrauchstanks aufrechtzuerhalten.

Die Erfindung wird anhand der Zeichnungen näher erläutert. Es zeigen:
- Fig. 1: ein Blockbild eines Verfahrensablaufs:
a) zusammengefasstes Blockbild des Verfahrensablaufs,
b) Detaillierung des Blockbildes mit Hauptelementen,
- Fig. 2: ein Übersichtsbild der dreistufigen Wärmegaserzeugungsanlage,
- Fig. 3: den Schnitt I - I in Fig. 2,
- Fig. 4: den Schnitt II-II in Fig. 2,
- Fig. 5: ein Schema eines Injektor-Mischers und
- Fig. 6: den Temperaturverlauf im Prozesszylinder.

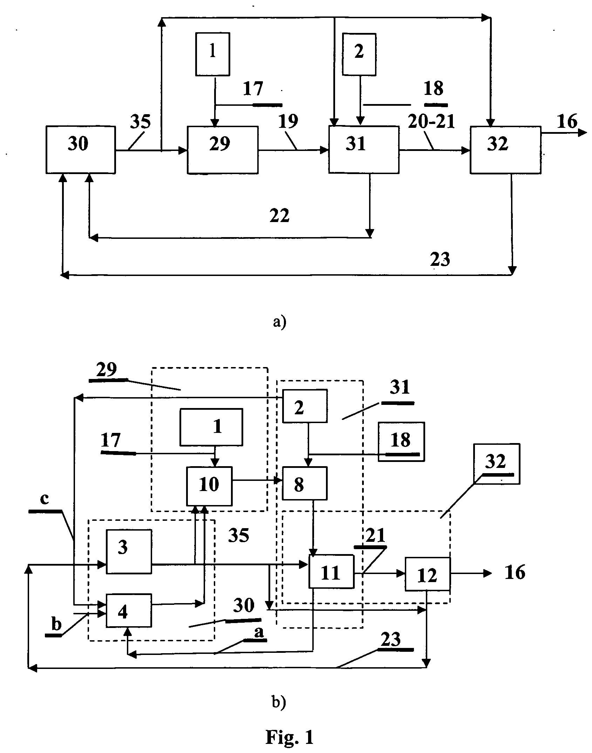

In den Figuren 1 bis 5 sind folgende Bezugszeichen für die gekennzeichneten Einrichtungen und Teile verwendet:
- 1: - Verbrauchstank für Wasser;
- 2: - Verbrauchstank für Kohlenwasserstoffkomponente CₙH₂ₙ₊2;
- 3: - Arbeitsbrenner;
- 4: - Startbrenner;
- 5: - externer unabhängiger Erzeuger mit einer Impulsfunkenzündeinrichtung;
- 6: - Turboaufladungseinrichtung;
- 7: - Induktionsheizer (Kontaktheizer) für den Start des Turbostromerzeugers;
- 8: - Injektor-Mischer;
- 9: - Flammkammer;
- 10: - die erste Stufe des Prozesszylinders;
- 11: - die zweite Stufe des Prozesszylinders,
- 12: - die dritte Stufe des Prozesszylinders;
- 13: - Zündungs-, Entflammungs- und Flammenbildungsbereich;
- 14: - Bereich der Prozessflammenbrennung;
- 15: - Vorrichtung zur Bildung der Arbeitsflamme;
- 16: - Bereich der Arbeitsflamme;
- 17: - Prozessrohrleitung für Druckwassereinpressung aus dem Verbrauchstank (1) zur ersten Stufe (10) des Prozesszylinders;
- 18: - Prozessrohrleitung für die Zufuhr der Kohlenwasserstoffkomponente CₙH₂ₙ₊₂ mittels Einpressung aus dem Verbrauchstank (2) in den Injektor-Mischer (8);
- 19: - Prozessrohrleitung für Dampfzufuhr von der ersten Stufe (10) des Prozesszylinders in den Injektor-Mischer (8);
- 20: - Prozessrohrleitung für die Förderung des Dampf-Kohlenwasserstoffgemisches aus dem Mischer (8) zur zweiten Stufe (11) des Prozesszylinders;
- 21: - Prozessrohrleitung für die Förderung des Dampf-Kohlenwasserstoffgemisches aus der zweiten Stufe (11) des Prozesszylinders zur dritten Stufe (12) des Prozesszylinders;
- 22: - Prozessrohrleitung für die Förderung des Dampf-Kohlenwasserstoffgemisches aus der zweiten Stufe (11) des Prozesszylinders in den Startbrenner (4) (Rückführung von Brennstoff im Zwangsaufheizungsbetrieb);
- 23: - Prozessrohrleitung für Brennstoffzufuhr von der dritten Stufe (12) der Prozessrohrleitung zum Arbeitsbrenner (3) (Rückführung von Brennstoff im Normal-Selbsterwärmungsbetrieb);
- 24: - Rohrleitung für Brennstoffentnahme für externe Verbraucher;
- 25: - Reglerventil;
- 26: - Wasserfüllstelle im Verbrauchstank (1);
- 27: - Füllstelle für Kohlenwasserstoffe im Verbrauchstank (2);
- 28: - Geräte zur Förderhöhe- und Drucküberwachung in Prozessrohrleitungen,
- 29: - Dampfbildung;
- 30: - Flammenbildung;
- 31: - Vermengung und Erwärmung des Dampf-Kohlenwasserstoffgemisches,
- 32: - Erwärmung des Dampf-Kohlenwasserstoffgemisches für Brennstoffherstellung,
- 33: - Innenzylinder des Wärmegasgenerators;
- 34: - Außenzylinder des Wärmegasgenerators; a - Zuleitung zum Start des Dampf-Kohlenwasserstoffgemisches aus der zweiten Stufe (11) des Prozesszylinders; b - Zuleitung zum Start des Brenngemisches von der externen Quelle; c - Zuleitung zum Start der Kohlenwasserstoffkomponente;
- 35: - Erwärmung des Prozesszylinders.

Das Verfahren und die Einrichtung setzen die Abhängigkeit H₂O + CₙH₂ₙ₊₂ = H₂ + CO₂ in die Praxis in einem mehrstufigen Hochtemperaturbetrieb um. Das Wärmevermögen von Kohlenstoff wird am besten unter Blauwassergas ausgenutzt. Die Dampfbildung von Kohlenstoff-Blauwassergas bedarf 8 % seiner eigenen Ressourcen. Dabei setzt sich Blauwassergas hauptsächlich aus CO (40 - 60 %) und H₂ (30 - 50 %) zusammen.

Der Blauwassergasbildungsvorgang stellt einen komplizierten wenigstens zweistufigen Prozess dar: Bei 500° C kommt eine vollständige Zerlegung in Wasserstoff und Kohlensäure (C+2H₂O = 2H₂+CO₂) zustande. Bei 1000 - 1200° C erfolgt die Zerlegung in Wasserstoff und Kohlenmonoxid (CO₂+C = 2CO). Wird das Wasser im Dampfzustand genommen, so wird die Zerlegung von Wasserdampf (C+H₂O = CO+H₂) von Wärmeverlusten begleitet. Deswegen führt dies zu einer Abkühlung. Im Zusammenhang damit, um die Wärmeverluste auszugleichen, muss die Temperatur der ersten Stufe der Erwärmung höher liegen. Die Temperatur in der Endstufe muss wenigstens 1300° C sein. Das Vorhandensein von Turboaufladung (durch Luft, Sauerstoff oder durch ein anderes zusätzliches Oxidiermittel) ermöglicht es, das so genannte Generatorgas mit der Gemischbrenntemperatur von 1935° C zu produzieren, wobei am Austritt praktisch keine umweltschädigende Bestandteile vorhanden sind.

Ein Verfahren ist im Blockbild des Verfahrensablaufs (Fig. 1) dargestellt. Das Verfahren umfasst (Fig. 1a) Flammenbildung und Sicherstellung von Prozessbrennen (30), um Komponenten und das Gemisch (35) zu erwärmen. Um den gesamten Vorgang und die Erfüllung der gestellten technischen Aufgabe sicherzustellen, ist die Trennung von Fertigungsflüssen mit getrennter Zuführung (17-18) von Komponenten Wasser (1) und Kohlenwasserstoffkomponente (2) vorgesehen. Das Wasser wird zwecks Erwärmung und Dampfbildung (29) für die nachfolgende Dampfzufuhr (19) mit der Kohlenwasserstoffkomponente vermengt. Danach erfolgt die Erwärmung des Dampf-Kohlenwasserstoffgemisches (31), welches bereits in diesem Verfahrensschritt brennbar sein kann. Dieses Gemisch wird während des Systemstarts (22) angewendet. Danach wird das Gemisch an die weiteren Stufen (32) zur Nacherwärmung (20-21) gefördert. Der hergestellte Brennstoff wird zum Eintritt des Systems zwecks Zündung (23) weitergeleitet. Er wird auch zur Bildung der Arbeitsflamme am Austritt der Anlage verwendet. Die Komponenten und das Gemisch (35) werden im Normalbetrieb mit Hilfe des Prozesszylinders erwärmt. Der Prozesszylinder hat dabei mehrere Stufen und zwar je nach Anzahl der Prozessstufen, die für die Ausführung des Verfahrens erforderlich sind.

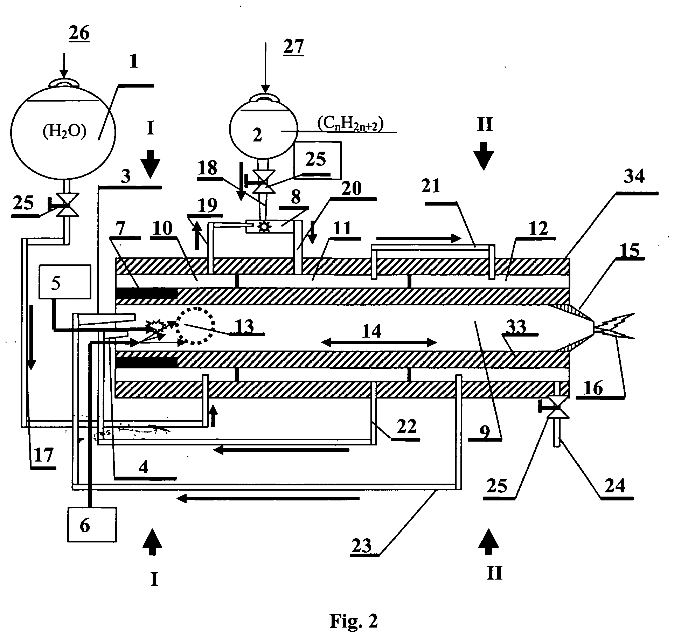

Die Komponenten - Wasser und Kohlenwasserstoffe - werden in wasserdichte Behälter (1, 2) unter einem konstanten Druck von 0,3 - 0,5 MPa gefüllt, um ihre ungestörte Zufuhr ins System mittels Einpressung über Reglerventile (25) (Fig. 1a, Fig. 2) sicherzustellen. Die Beladung kann sowohl periodisch je nach Komponentenverbrauch als auch ununterbrochen erfolgen.

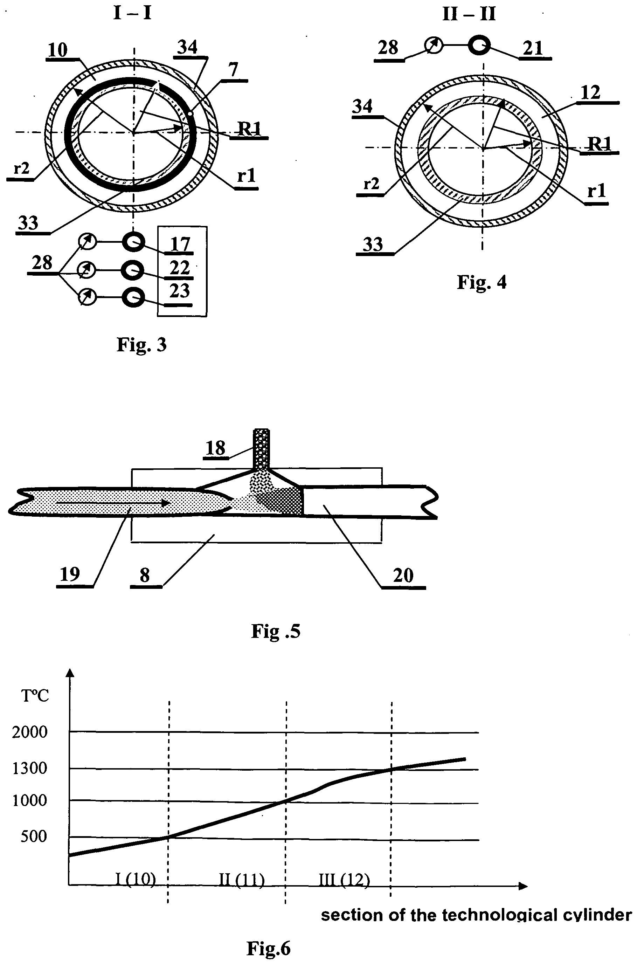

Als Grundlage wird ein Dreistufenvorgang angesehen. Bei diesem Vorgang wird das Wasser in der ersten Stufe (10) im Normal-Selbsterwärmungsbetrieb erhitzt, bis überhitzter Dampf mit einer Temperatur von 500 - 550° C entsteht. Im Startbetrieb wird Zwangsaufheizung bis zu einer Temperatur von 450 - 500° C vorgenommen. Der entstandene überhitzte Dampf wird mit Kohlenwasserstoffkomponenten vermengt. Die Vermengung wird mittels Dampfinjektion (8) sichergestellt (Fig. 5). Danach wird das Dampf-Kohlenwasserstoffgemisch in der zweiten Stufe (11) des Prozesszylinders zusätzlich erwärmt und in der dritten Stufe (12) bis zur Temperatur der gasförmigen Treibstoffbildung erhitzt. Der gasförmige Treibstoff wird im Normal-Selbsterwärmungsbetrieb in die Rückführung (23) zwecks Zündung und Flammenbildung gefördert. Bei einem Startbetrieb mit Zwangsaufheizung (7) wird das Dampf-Kohlenwasserstoffgemisch (22) zur zweiten Stufe (11) gefördert, um es aus der zweiten Stufe (11) zu zünden.

Die Anlage enthält entsprechende Elemente zur Ausführung des Verfahrens. Sie ist als eine einzige Einrichtung ausgebildet. Sie hat einen zusammengebauten mehrteiligen Körper und umfasst ein System von Brennern (30), eine Flammkammer (9), eine Injektor-Einrichtung (8) zur Komponentenvermengung, eine Impulszündvorrichtung (5), Rohrleitungen und ein Startsystem mit einem Startbrenner (4) mit Brennstoffversorgung (a, b oder c).

Der Körper ist als ein einheitlicher Körper in Form von zwei ineinander verschachtelten Zylinderrohren (33, 34) mit einem Spiel ausgebildet, so dass ein Prozesszylinder gebildet wird. Der Prozesszylinder wird mit der Flamme erwärmt und in wasserdicht getrennte Stufen (10, 11, 12) - und zwar je nach Anzahl der Prozessstufen bei der Herstellung des Brennstoffgemisches - aufgeteilt. Die erste Stufe (10) der Einrichtung entspricht der Dampfbildungsstufe und hat eine unabhängige Induktionswärmequelle (7), um den Startvorgang auszuführen. Die zweite Stufe entspricht der Komponentenvermengung und der Erwärmung von Dampfgasgemisch. Sie umfasst Stufe (11) des Prozesszylinders und den Injektor-Mischer (8). Die 3. Stufe (12) dient zur Gemischenderwärmung und zur Brennstoffherstellung. Der Behälter des Innenrohrs (9) mit dem Innendurchmesser r1 bildet eine Flammkammer zur Flammenausbildung (13, 14), um den Prozesszylinder zu bilden. Die Vermengungseinrichtung (8) der 2. Stufe wird in Form eines Injektors mit getrennter Einführung (19) von Wasser in Dampfform und Einführung (18) der Kohlenwasserstoffkomponente ausgebildet. Die Einrichtung ist mit Brennstofftanks versehen. Die Brennstofftanks sind als wasserdichte getrennte Verbrauchsbehälter für Wasser (1) und Kohlenwasserstoffkomponenten (2) ausgebildet. Der Verbrauchsbehälter (1) für Wasser ist mittels Rohrleitung (17) mit dem Eintritt der ersten Stufe (10) des Prozesszylinders der Dampfbildungskammer verbunden. Der Austritt der Dampfbildungskammer ist mittels Rohrleitung mit dem ersten Eintritt des Injektors verbunden. Der zweite Eintritt des Injektors ist mit dem Verbrauchstank (2) für Kohlenwasserstoffkomponente verbunden. Der Austritt des Injektors ist mittels Rohrleitung mit Kammer (11) zur Erwärmung von Dampfgasgemisch verbunden. Die Kammer (11) zur Erwärmung von Dampfgasgemisch ist mittels Rohrleitung (21) mit der Erwärmungskammer (12) zur Bildung von Brennstoffgemisch verbunden. Der Austritt der Erwärmungskammer (12) ist mittels Rohrleitung (23) mit dem Eintritt der Flammkammer (9) verbunden, in die das Turbinenbrennersystem mit Zündvorrichtung eingebaut ist. Die Zündvorrichtung hat eine Impulsfunkenzündquelle (5), einen Arbeitsbrenner (3), einen Startbrenner (4). Am Austritt der Flammkammer ist ein Element zur Bildung der Arbeitsflamme (16) eingebaut, wobei dieses Element in Form von einer Verengungsvorrichtung (15) ausgebildet ist.

Das Radiusverhältnis der den Prozesszylinder zur Herstellung des Brennstoffgemisches bildenden Rohre kann
0,3 > (R1/r2) > 0,1 betragen;
wobei R1 - der Außendurchmesser des Innenrohrs und
r2 - der Innendurchmesser des Außenrohrs ist.

Am Eintritt des Turbinenbrennersystems ist eine Turboaufladungseinrichtung (6) eingebaut. In den Verbrauchstanks (1, 2) wird ein konstanter Überdruck von 0,3 - 0,5 MPa aufrechterhalten.

Das Kurvenbild aus Fig. 6 zeigt die Abhängigkeit zwischen der Temperatur im Prozesszylinder je nach seinen Stufen.

Die Vergleichskenndaten der bekannten technischen Lösung und des vorgeschlagenen Verfahrens sind der nachstehenden Tabelle zu entnehmen. Sie weisen nach, dass die Ausführung des Verfahrens die gestellten technischen Aufgaben löst. Es liegt eine erhöhte Stabilität der Vorgänge zur Herstellung von wasserstoffhaltigem Treibgas (beachtlicher Rückgang der Ausfallrate), Verminderung des Energieaufnahmevermögens und des Kohlenwasserstoffkomponenten-verbrauchs (Steigerung des Wasser/Dieselkraftstoff-Verhältnisses) vor.

**Tabelle**

| Beispiel der konkreten Ausführung des Verfahrens und technische Kenndaten der Wärmegaserzeugungsanlagen zur Umsetzung des Verfahrens von G.G. Arakelian. | | | |
|---|---|---|---|
| Technischer Kennwert | Messeinheit | Granstroy-Anlage Typ VTPGU-1 Serie 2009 (realisierter Prototyp) | Granstroy-Anlage Typ VTPGU-700 Serie 2011 (realisierte angemeldete Lösung) |
| Wasserverbrauch H₂O | l/St. | 20 - 25 | 20 - 25 |
| Dieselkraftstoffverbrauch im Normalbetrieb | l/St. | 3,0 - 3,1 | 2,4 - 2,5 |
| Wasser-/Dieselkraftstoff-Verhältnis | | (6,5:1) - (8,0:1) Durchschnitt (7,25:1) (87,9:12,1)% | (8,0:1) - (10,4:1) Durchschnitt (9,5:1) (90,5:9,5)% |
| Außendurchmesser der Anlage | mm | 203 | 203 |
| Wärmeleistung | Gcal | 1,0 | 1,0 |
| Durchschnittliche Rate von Flammenabriss nach Betriebszeit von 1000 Stunden | Abrisse/St. | 0,1 | 0,01 |

## Patentansprüche

1. Geschlossenes Mehrstufenverfahren zur Herstellung von wasserstoffhaltigem Treibgas mit folgenden Verfahrensschritten: Prozessstart im Zwangsaufheizungsbetrieb und Ausführung des Vorgangs im Normal-Selbsterwärmungsbetrieb mit Einleitung einer Kohlenwasserstoffkomponente und Wasser mittels Druckeinpressung, Erwärmung, Rückführung von Brennstoff in den Zündungsbereich, um eine Flamme zu bilden, wobei der Vorgang der Brennstoffherstellung mehrstufig mit getrennter Einführung der Kohlenwasserstoffkomponente und Wasser in einen mittels Flamme erwärmten Prozesszylinder ausgeführt wird, wobei der Prozesszylinder in getrennte Stufen (10, 11, 12) je nach Anzahl der Stufen des Brennstoffherstellungsvorgangs aufgeteilt ist, in der ersten Stufe (10) Wasser eingeführt und bis zur Wasserdampfbildung erhitzt und in den weiteren Stufen (11, 12) die Kohlenwasserstoffkomponente eingeführt und mit Wasserdampf vermengt wird, das Dampf-Kohlenwasserstoffgemisch danach zusätzlich erwärmt und dann bis zur Temperatur der Bildung des wasserstoffhaltigen Treibgases erhitzt wird, dessen Strömung in den Zündungsbereich rückgeführt wird, um das Brennen der Flamme sicherzustellen, wobei
die Treibgasströmung im Normal-Selbsterwärmungsbetrieb aufgeteilt wird, wobei ein Teil in den Zündungsbereich (13) zur Flammenbildung rückgeführt und ein anderer Teil zur Lagerung und/oder zum externen Verbrauch weitergeleitet wird, und wobei
die Vorgänge der Bildung von wasserstoffhaltigem Treibgas im Normal-Selbsterwärmungsbetrieb dreistufig unter Erwärmung ausgeführt werden, wobei in der ersten Stufe (10) Wasser mittels Druckeinpressung unter einem Druck von 0,3 - 0,5 MPa eingeführt und bis zur Wasserdampfbildung mit einer Temperatur von 500 - 550° C erwärmt wird,
dass in der zweiten Stufe (11) die Kohlenwasserstoffkomponente mittels Einpressung unter einem Druck von 0,3 - 0,5 MPa in den einen Mischer (8) eingeführt wird,
dass diese Kohlenwasserstoffkomponente mit Wasserdampf mittels Injektion unter einem Druck von 0,06 - 0,25 MPa beim Wasser- Kohlenwasserstoffkomponenten-Verhältnis im Bereich von 10,5 : 1 bis 8 : 1 vermengt (9) wird und dass das Gemisch bis zu einer Temperatur von 1000 - 1100° C erhitzt wird und dass in der dritten Stufe (12) das Gemisch bis zu einer Temperatur von 1300 - 2000° C erhitzt wird.

2. Verfahren nach Anspruch 1,
**dadurch gekennzeichnet,**
**dass** die Zündung (13) im Normal-Selbsterwärmungsbetrieb mittels einer Impulszündvorrichtung (5) mit Hilfe eines externen Funkenbildungsgenerators ausgeführt wird, welcher mit einer Frequenz von 1 - 2 Hz betrieben wird.

3. Verfahren nach Anspruch 1,
**dadurch gekennzeichnet,**
**dass** der Flammenbildungs- und -aufrechterhaltungsvorgang mit einer Turboaufladung ausgeführt wird.

4. Verfahren nach Anspruch 1,
**dadurch gekennzeichnet,**
**dass** beim Start im Zwangsaufheizungsbetrieb Wasser in einer Menge von 40 - 50 % des maximal zulässigen Normalarbeitsumfangs unter einem Druck von 0,3 - 0,5 MPa voreingepresst wird und
**dass** das Wasser in der ersten Stufe (10) bis zur Wasserdampfbildung mit einer Temperatur von 450 - 500° C von einer unabhängigen Wärmequelle, z. B. durch einen Induktionsheizer (7), erhitzt wird.

5. Verfahren nach Anspruch 1,
**dadurch gekennzeichnet,**
**dass** die Zündung des Dampf-Kohlenwasserstoffgemisches oder eines anderen Brennstoffbestandteils beim Prozessstart im Zwangsaufheizungsbetrieb von einer unabhängigen Quelle mittels einer Impulsfunkenzündeinrichtung mit einer unabhängigen Funkenbildungsquelle durchgeführt wird, wobei die Funkenbildungsquelle mit einer Frequenz von 40 - 50 Hz betrieben wird.

6. Geschlossene Wärmegaserzeugungsanlage zur Herstellung von wasserstoffhaltigem Treibgas in Form einer einzigen Einrichtung mit einem zusammengebauten mehrteiligen Körper einschließlich eines Systems von Brennern (4), einer Flammkammer (9), eines Rührwerks zur Komponentenvermengung, einer Impulszündvorrichtung (13), Rohrleitungen (17 bis 19) und eines Startsystems mit einer unabhängigen Induktionswärmequelle (7) und einem Startbrenner (4) mit Brennstoffversorgung,
**dadurch gekennzeichnet,**
**dass** der zusammengebaute Körper einheitlich in Form von zwei mit einem Spiel ineinander verschachtelten Zylinderrohren ausgebildet ist, so dass ein Prozesszylinder gebildet ist, welcher in getrennte Stufen (10, 11, 12) des Prozesszylinders je nach Anzahl der Prozessstufen bei der Herstellung des Brennstoffgemisches aufgeteilt ist,
**dass** die Flammkammer (9) durch einen Behälter eines Innenrohrs gebildet ist, dass die Vermengungseinrichtung in Form eines Injektors mit einer getrennten Einführung von Wasser in Form von Dampf und Einführung von Kohlenwasserstoffkomponente ausgebildet ist, wobei der Austritt der letzten Stufe (13) des Prozesszylinders mittels einer Rohrleitung mit dem Eintritt der Flammkammer (9) verbunden ist, in den ein Brennersystem eingebaut ist, wobei das Brennersystem eine Zündvorrichtung (5) mit einer Impulsfunkenzündquelle, einem Arbeitsbrenner (3) und einem Startbrenner (5) aufweist, dass am Austritt der Flammkammer (9) ein Element in Form einer Verengungseinrichtung (15) zur Bildung der Arbeitsflamme (16) angeordnet ist, dass die geschlossene Wärmegaserzeugungsanlage mit Brennstofftanks versehen ist, welche in Form von wasserdichten getrennten Verbrauchsbehältern (1, 2) für Wasser und Kohlenwasserstoffkomponente ausgebildet sind,
**dass** der Prozesszylinder dreistufig ausgebildet ist, wobei die 1. Stufe für die Dampfbildung unter Einsatz einer unabhängigen Induktionswärmequelle sorgt, die 2. Stufe die Komponentenvermengung und die Erwärmung von Dampfgasgemisch realisiert und die 3. Stufe die Aufheizung zur Herstellung des Brennstoffgemisches sicherstellt,
**dass** der Verbrauchstank (1) für Wasser mittels einer Rohrleitung mit dem Eintritt der 1. Stufe des Prozesszylinders verbunden ist, deren Austritt mittels einer Rohrleitung mit dem ersten Eintritt des Injektors verbunden ist, der 2. Eintritt des Injektors mittels einer Rohrleitung mit dem Verbrauchstank die für Kohlenwasserstoffkomponente verbunden ist und der Austritt des Injektors über eine Rohrleitung mit der 2. Stufe des Prozesszylinders verbunden ist, welche mittels einer Rohrleitung mit der dritten Stufe des Prozesszylinders verbunden ist,
wobei die Vorrichtungen so angepasst ist, dass die Treibgasströmung im Normal-Selbsterwärmungsbetrieb aufgeteilt wird, wobei ein Teil in den Zündungsbereich (13) zur Flammenbildung rückgeführt und ein anderer Teil zur Lagerung und/oder zum externen Verbrauch weitergeleitet wird.

7. Einrichtung nach Anspruch 6,
**dadurch gekennzeichnet,**
**dass** das Radiusverhältnis der den Prozesszylinder zur Herstellung des Brennstoffgemisches bildenden Rohre (33, 34)
0,3 > (R1/r2) > 0,1 beträgt,
wobei R1 - der Außendurchmesser des Innenrohrs und
r2 - der Innendurchmesser des Außenrohrs ist.

8. Einrichtung nach Anspruch 6,
**dadurch gekennzeichnet,**
**dass** am Eintritt des Brennersystems eine Turboaufladungseinrichtung eingebaut ist.

## Claims

1. A closed, multiple-stage method for producing hydrogen-containing propellant gas having the following method steps: starting the process in the forced heating mode and performing the procedure in the normal self-heating mode with introduction of a hydrocarbon component and water by means of pressure insertion, heating, returning fuel to the ignition region in order to form a flame, wherein the procedure of fuel production is performed in multiple stages with separate introduction of the hydrocarbon component and water into a flame-heated process cylinder, and the process cylinder is divided into separate stages (10, 11, 12), depending on the number of stages in the fuel production procedure; in the first stage (10), water is introduced and heated until steam forms, and in the further stages (11, 12), the hydrocarbon component is introduced and mixed with steam, after which the steam and hydrocarbon mixture is additionally heated and then heated up to the temperature of formation of the hydrogen-containing propellant gas, the flow of which is returned to the ignition region, in order to ensure the burning of the flame; and the propellant gas flow in the normal self-heating mode is divided, and a portion is returned to the ignition region (13) for flame formation and another portion is carried further for storage and/or for external use, and the procedures of forming hydrogen-containing propellant gas in the normal self-heating mode are performed in three stages while being heated,
wherein and in the first stage (10), water is introduced by means of pressure insertion at a pressure of 0.3 - 0.5 MPa and heated at a temperature of 500 = 550°C, until steam forms;
that in the second stage (11), the hydrocarbon component is introduced by insertion at a pressure of 0.3 - 0.5 MPa into the one mixer (8);
that this hydrocarbon component is mixed (9) with steam by means of injection at a pressure of 0.06 - 0.25 MPa at the ratio of water component to hydrocarbon component in the range of 10.5 : 1 to 8 : 1; and that in the third stage (12), the mixture is heated up to a temperature of from 1300 - 2000° C.

2. The method of claim 1,
**characterized in that**
the ignition (13) is performed in the normal self-heating mode by means of an impulse ignition device (5) with the aid of an external spark-forming generator which is operated at a frequency of 1 - 2 Hz.

3. The method of claim 1,
**characterized in that**
the flame-forming and flame-maintaining procedure is performed by turbocharging.

4. The method of claim 1,
**characterized in that**
at the start, in the forced heating mode, water in a quantity of 40 - 50 % of the maximum allowable normal working range is preinserted at a pressure of 0.3 - 0.5 MPa, and
that the water in the first stage (10) is heated at a temperature of 450 - 500° C from an independent heat source, such as by means of an induction heater (7), until steam forms.

5. The method of claim 1,
**characterized in that**
the ignition of the mixture of steam and hydrocarbon or of some other fuel component at the start of the process is performed in the forced heating mode from an independent source by means of a pulse spark ignition device with an independent spark-forming source, and the spark-forming source is operated at a frequency of 40 - 50 Hz.

6. A closed hot-gas-generation system for producing hydrogen-containing propellant gas in the form of a single device having an assemble multi-part body including a system of burners (4), a flame chamber (9), a stirring mechanism for mixing components, an impulse ignition device (13), pipelines (17-19) and a starting system having an independent induction heat source (7) and a starting burner (4) with a fuel supply **characterized in that**
the assembled multi-part body is embodied as a unit in the form of two cylinder tubes nested with play in one another, so that a process cylinder is formed which is divided into separate stages (10, 11, 12) of the process cylinder depending on the number of process stages in the production of the fuel mixture;
that the flame chamber (9) is formed by a container of an inner pipe;
that the mixing device is embodied in the form of an injector having a separate introduction of water, in the form of steam, and of hydrocarbon component, and the outlet of the final stage (13) of the process cylinder communicates by means of a pipeline with the inlet of the flame chamber (9) into which a burner system is built, and the burner system has an ignition device (5) with an impulse spark ignition source, a work burner (3) and a starting burner (5);
that an element in the form of a narrowing device (14) for forming the work flame (16) is located at the outlet of the flame chamber (9);
that the closed heating gas generation system is provided with fuel tanks, which are embodied in the form a watertight, separate consumption containers (1, 2) for water and hydrocarbon component;
that the process cylinder is embodied in three stages, in which the first stage provides for the steam formation using an independent induction heating source, the second stage accomplishes the component mixing and the heating of steam gas mixture, and the third stage ensures the heating for producing the fuel mixture;
that the consumption tank (1) for water communicates by means of a pipeline with the inlet to the first stage of the process cylinder, the outlet of which stage communicates via a pipeline with the first inlet of the injector, the second inlet of the injector communicates by means of a pipeline with the consumption tank the for hydrocarbon component and the outlet of the injector communicates via a pipeline with the second stage of the process cylinder, which stage communicates by means of a pipeline with the third stage of the process cylinder,
and the devices is adapted such that the propellant gas flow in the normal self-heating mode is divided, with one portion being returned into the ignition region (13) for flame formation and another portion is carried onward for storage and/or for external use.

7. The apparatus of claim 6,
**characterized in that**
the ratio of the radius of the pipes (33, 34) forming process cylinder for producing the fuel mixture amounts to 0.3 > (R1/r2)>0.1,
where R1 is the outer diameter of the inner pipe and
r2 is the inner diameter of the outer pipe.

8. The apparatus of claim 6,
**characterized in that**
a turbocharging apparatus is built in at the inlet of the burner system.

## Revendications

1. Procédé fermé à plusieurs rapports pour la fabrication de gaz propulseur contenant de l'hydrogène avec les étapes de procédé suivantes : démarrage du processus en mode de chauffage forcé et exécution de l'opération en mode d'auto-échauffement normale avec introduction d'une composante d'hydrocarbure et de l'eau à l'aide d'une injection à pression, échauffement, recyclage de combustible dans la zone d'allumage pour former une flamme où l'opération de la production du combustible à plusieurs rapports avec introduction séparée de la composante d'hydrocarbure et l'eau est exécutée dans un cylindre de processus échauffé grâce à la flamme, où le cylindre du processus est réparti en des rapports séparables (10,11,12) en fonction du nombre des rapports de l'opération de la production du combustible, dans le premier rapport (10) de l'eau est introduite et est échauffée jusqu'à la formation de la vapeur et dans les autres rapports (11, 12) la composante d'hydrocarbure est introduite et mélangée à la vapeur, le mélange de la vapeur et de l'hydrocarbure est en suite chauffé jusqu'à ce que la température de la formation du gaz propulseur contenant de l'hydrogène est échauffée, que son écoulement est renvoyé vers la zone d'allumage pour garantir la calcination de la flamme, où l'écoulement du gaz propulseur est réparti en mode d'auto-échauffement normale, où une partie est renvoyée vers la zone d'allumage (13) pour la formation de la flamme et une autre partie est relayée pour le stockage et/ou la consommation extérieure et où les opérations de la formation du gaz propulseur contenant de l'hydrogène sont exécutées en mode d'auto-échauffement normale à trois rapports par chauffage, où de l'eau dans le premier rapport (10) est introduite par injection à pression sous une pression de 0,3-0,5 MPa et est échauffée jusqu'à la formation de la vapeur à une température de 500-550°C, au point que la composante d'hydrocarbure dans le deuxième rapport (11) est introduite par le biais d'une injection à pression de 0,3-0,5 MPa dans un mélangeur, que cette composante d'hydrocarbure est mélangée (9) à de la vapeur par injection à pression de 0,06-0,25 MPa au ratio d'eau-composante d'hydrocarbure de 10,5:1 jusqu'à 8 et que le mélange est échauffé à une température de 1000-1100°C et que le mélange est échauffé dans le troisième rapport à une température de 1300-2000°C.

2. Procédé selon revendication 1,
Est caractérisé de sorte que
L'allumage (13) est exécuté en mode d'auto-échauffement normale par le biais d'un dispositif d'allumage à impulsion (5) via un générateur externe de formation d'étincelles fonctionnant à une fréquence de 1-2 Hz.

3. Procédé selon revendication 1,
Est caractérisé de sorte que
L'opération de formation de flammes et du maintien est exécutée à l'aide d'un turbosoufflage.

4. Procédé selon revendication 1,
Est caractérisé de sorte que
De l'eau est pré-pressée lors du démarrage du mode d'échauffement forcé en une quantité de 40-50% du volume normale maximale autorisé sous une pression de 0,3-0,5 MPa et que l'eau est chauffée dans le premier rapport (10) jusqu'à la formation de la vapeur à une température de 450-500 °C d'une source indépendante de chaleur à titre d'exemple par un réchauffeur d'induction (7).

5. Procédé selon revendication 1,
Est caractérisé de sorte que
L'allumage du mélange vapeur-hydrocarbure ou d'une autre composante de combustible est réalisé lors du démarrage du processus en mode de chauffage forcé d'une source indépendante à l'aide d'une installation d'allumage à impulsion d'étincelles avec une source indépendante de formation d'étincelles où la source de formation d'étincelles est exploitée à une fréquence de 40-50 Hz.

6. Installation fermée de production de masse thermique pour la fabrication de gaz propulseur contenant de l'hydrogène sous forme d'une seule installation présentant un corps à plusieurs parties assemblée y inclus un système de brûleurs (4), une chambre de flamme (9), un agitateur pour le mélange des composants, un dispositif d'allumage à impulsion (13), des conduites (17 jusqu'à 19) et un système de démarrage avec une source de chaleur indépendante à induction (7) ainsi qu'un brûleur de démarrage (4) avec alimentation en combustible,
Est caractérisée de sorte que
Le corps assemblé est formé d'une manière harmonieuse de deux tuyaux de cylindre imbriqués de sorte qu'un cylindre de processus est réparti en rapports séparables (10,11,12) du cylindre de processus en fonction des rapports du processus lors de la fabrication du mélange du combustible,
Que la chambre de flamme (9) est formée par un conteneur d'un tube interne, que l'installation de mélange est formée d'un injecteur avec une introduction séparée de l'eau sous forme de vapeur et d'une introduction d'hydrocarbure, où la sortie du dernier rapport (13) du cylindre de processus est relié via une conduite à l'entrée de la chambre de flamme (9) où un système de brûleur est intégré, où le système de brûleur présente un dispositif d'allumage (5) avec une source d'allumage d'étincelles à impulsion, un brûleur de fonctionnement (3) et un brûleur de démarrage (5),
Qu'un élément au niveau de la sortie de la chambre de flamme (9) est disposé sous forme de dispositif de rétrécissement (15) pour la formation de la flamme de fonctionnement (16),
Que l'installation fermée de production de masse thermique est munie de cuves de combustible formées sous forme de conteneurs de consommation séparables étanches (1,2) pour l'eau et la composante d'hydrocarbure,
Que le cylindre de processus est formé de trois rapports où le premier rapport garantit la formation de la vapeur en utilisant une source de chaleur à induction, le deuxième rapport réalise le mélange des composants et l'échauffement du mélange gaz-vapeur, tandis que le troisième rapport sert au chauffage pour la production du mélange du combustible,
Que la cuve de consommation (1) pour l'eau est reliée par une conduite à l'entrée du premier rapport du cylindre de processus dont la sortie est reliée à l'aide d'une conduite à la première entrée de l'injecteur, que la deuxième entrée de l'injecteur est reliée par une conduite à la cuve de consommation pour la composante d'hydrocarbure et que la sortie de l'injecteur via une conduite est reliée au deuxième rapport du cylindre de processus, laquelle reliée par une conduite au troisième rapport du cylindre de processus,
Où les dispositifs sont adaptés de sorte que
L'écoulement du gaz propulseur est réparti en mode d'auto-échauffement d'allumage où une partie est renvoyée vers la zone d'allumage (13) pour la formation de flammes et une autre partie est relayée pour le stockage et/ou la consommation externe.

7. Procédé selon revendication 6,
Est caractérisé de sorte que
Le ratio de rayon des tuyaux (33,34) formant le cylindre de processus pour la production du mélange du combustible s'élève à 0,3>(R1/r2)>0,1 où R1 est le diamètre extérieure du tube interne, tandis que r2 est le diamètre intérieure du tube externe.

8. Procédé selon revendication 6,
Est caractérisé de sorte qu'un dispositif de turbosoufflage est intégré à l'entrée du système du brûleur.
